# EUROPÄISCHE PATENTSCHRIFT

(11) **EP 2 776 303 B1**
(45) Veröffentlichungstag und Bekanntmachung des Hinweises auf die Patenterteilung: **14.06.2017**
(21) Anmeldenummer: 12794632.5
(22) Anmeldetag: 07.11.2012
(51) Int. Cl.: B62D 5/04, F16H 25/22, F16H 25/24

(54) **KUGELGEWINDETRIEB MIT LAGERAUSGLEICH**
BALL SCREW HAVING BEARING COMPENSATION
VIS D'ENTRAÎNEMENT À BILLES À COMPENSATION DE PALIER

(30) Priorität: 07.11.2011 DE 102011117723
(43) Veröffentlichungstag der Anmeldung: 17.09.2014
(73) Patentinhaber: ThyssenKrupp Presta AG, 9492 Eschen (LI)
(72) Erfinder: GERGELY, László, 73734 Esslingen (DE)
(74) Vertreter: Lenzing Gerber Stute
(86) Internationale Anmeldenummer: PCT/EP2012/004628
(87) Internationale Veröffentlichungsnummer: WO 2013/068104

(56) Entgegenhaltungen:
- EP-A2- 1 350 971
- WO-A1-2011/015374
- WO-A1-2011/154435
- DE-A1-102009 020 554
- DE-A1-102010 003 233

## Beschreibung

Die Erfindung betrifft ein Kugelgewindetrieb nach dem Oberbegriff des unabhängigen Anspruchs 1.

Kugelgewindetriebe werden allgemein als reibungsarme und nahezu spielfreie Antriebe für Spindeln eingesetzt. Sie setzen eine Drehbewegung in eine Linearbewegung um und werden deshalb insbesondere in Lenksystemen von Kraftfahrzeugen eingesetzt. Zur Unterstützung der Lenkung werden die Gewindetriebe elektrisch und/oder mechanisch angetrieben, wodurch die Spindel axial verschoben wird.

Als einfache und energiesparende Variante haben sich elektromechanische Servolenkungen etabliert, die den Kraftstoffverbrauch eines Fahrzeuges verringern und die Antriebsleistung der Räder verbessern. Bei elektromechanischen Systemen wird ein herkömmlich bekanntes hydraulisches System durch einen elektronisch geregelten Elektromotor ersetzt. Zur Kraftübertragung werden einerseits Zahnstangen bzw. Ritzel eingesetzt, oder andererseits Riemenantriebe.

Bei solchen Riemensystemen ist der unterstützende Motor mittels eines Riemens mit dem Kugelgewindetrieb verbunden, wobei die Riemenscheibe drehfest mit der Kugelmutter verbunden ist, wie dieses aus der gattungsbildenden DE 10 2010 003 233 A1 bekannt ist. Hierdurch besteht die Gefahr eines Spannungsabfalls, wenn die Kugelmutter bei elastisch abgestützten Kugelgewindetrieben sich um ihre axiale Achse verkippt. Dadurch wird zumindest teilweise der Riemen von der Riemenscheibe bzw. dem Motor entkoppelt, wodurch die Unterstützungskraft durch den Motor vermindert wird. Weiterhin entstehen verstärkt Geräusche durch die über den Spannungsabfall erzeugte Anregung des Riemens. Der wohl entscheidendste Punkt ist die Lebensdauer des Riemens. Riemen dieser Art verlieren deutlich an Lebensdauer, wenn sie permanent diesen kleinen, aber häufigen Spannungsschwankungen unterzogen werden.

Es ist deshalb eine Aufgabe der Erfindung den eingangs erwähnten Kugelgewindetrieb weiterzuentwickeln und eine dauerhafte Verbindung von Riemenscheibe mit dem Unterstützungsmotor zu gewährleisten.

Eine Vorrichtung zur Lösung dieser Aufgabe weist die Merkmale des unabhängigen Anspruchs 1 auf. Danach wird ein Kugelgewindetrieb vorgeschlagen mit einer um eine Achse drehbaren Kugelmutter zur Aufnahme einer darin konzentrisch angeordneten Gewindespindel, wobei die Kugelmutter zumindest teilweise in einem einen Lageraußenring und einen Lagerinnenring aufweisenden Wälzlager angeordnet ist und eine Riemenscheibe mit dem Lagerinnenring drehfest verbunden ist, wobei die Kugelmutter relativ zur Riemenscheibe in axialer und/oder radialer Richtung beweglich ist. Durch die radiale und/oder axiale Entkoppelung der Riemenscheibe von der Kugelmutter können die eingangs erwähnten Nachteile überwunden werden und die Spannung des Riementrieb aufrecht erhalten werden.

Nach einer vorteilhaften Weiterbildung kann die Kugelmutter kippbar gegenüber der Riemenscheibe in dem Wälzlager angeordnet sein. Solange die Riemenscheibe drehfest mit dem Lager der Kugelmutter verbunden ist, erfolgt eine gleichmäßig Kraftübertragung des Unterstützungsmotors auf den Kugelgewindetrieb.

Gemäß einer weiteren Ausführungsform kann ein Gleitring zwischen der Kugelmutter und dem Wälzlager, insbesondere dem Lagerinnenring angeordnet sein. Der Gleitring ermöglicht eine Kippbewegung der Kugelmutter gegenüber dem Wälzlager, an dem die Riemenscheibe drehfest angeordnet ist.

Vorteilhafterweise kann eine Außenumfangsfläche des Lagerinnenrings zumindest zum Teil konkav und eine Außenumfangsfläche des Gleitrings wenigstens teilweise konvex ausgebildet sein, wobei beide Außenumfangsflächen miteinander korrespondieren. Durch die besondere Ausgestaltung der beiden zueinander gewandten Flächen des Lagerinnenrings und des Gleitrings, wird die Kippbewegung der Kugelmutter begünstigt. Eine Krümmung der jeweiligen Fläche ist der Kippbewegung angepasst.

Weiterhin kann vorteilhaft vorgesehen sein, dass der Gleitring eine oder mehrere, vorzugsweise zwei Ausnehmungen aufweist, die insbesondere als Durchgangsöffnung in dem Gleitring ausgebildet sind. Zusätzlich kann die Kugelmutter eine oder mehrere Nuten aufweisen, die sich vorzugsweise in Axialrichtung der Kugelmutter erstrecken, zur wenigstens teilweisen Aufnahme zumindest eines Mitnahmeelements. Besonders bevorzugt weist die Kugelmutter zwei Nuten auf, in denen jeweils ein Mitnahmeelement positioniert ist. Die Nuten können sich von einem Ende der Kugelmutter in Richtung einem gegenüberliegenden Ende erstrecken.

Vorteilhafterweise können die Ausnehmungen des Gleitrings und die Nuten der Kugelmutter miteinander korrespondieren und das Mitnahmeelement sich durch die entsprechende Ausnehmung des Gleitrings hindurch erstrecken. Im Bereich des Mitnahmeelements wird dadurch eine Ebene gebildet, um die sich die Kugelmutter gegenüber dem Lager und damit auch der Riemenscheibe verkippen kann.

Nach einem vorteilhaften Ausführungsbeispiel kann das Mitnahmeelement vorzugsweise eine Kugel oder ein Bolzen sein und in Anlage mit dem Lagerinnenring stehen. Durch die Krümmung der Außenumfangsfläche des Lagerinnenrings kann die Verkippung der Kugelmutter durch die punktuelle Lagerung im Bereich der Mitnahmeelemente erleichtert werden. Zusätzlich kann eine Verkippung durch eine Achse erfolgen, die durch die sich gegenüberliegenden Mitnahmeelement verläuft.

Die Nuten sind in Abhängigkeit der Mitnahmeelemente entweder halbrund oder eckig ausgeführt, wobei ebenfalls in dem Lagerinnenring eine Nut vorgesehen sein kann, die eine entsprechende Kontur aufweist. Durch die Mitnahmeelemente sind Kugelmutter und Wälzlager im Wesentlich drehfest miteinander verbunden.

Weiterhin kann die Kugelmutter einen umlaufenden Absatz aufweisen zur Widerlagerung des Gleitrings. Der Absatz ist im Wesentlichen im Bereich der Anlenkung von Riemenscheibe und Wälzlager angeordnet, wobei vorzugsweise ein Abstützring zwischen dem Gleitring und dem Absatz positioniert ist, der als Widerlager für den Lagerinnenring dienen kann.

Der Gleitring kann nach einem weiteren vorteilhaften Ausführungsbeispiel der Erfindung auf der Kugelmutter mittels einer Überwurfmutter gesichert sein. Die Überwurfmutter umfasst die Kugelmutter und positioniert den Gleitring in axialer Richtung auf der Kugelmutter, wobei der Gleitring insbesondere gegen den Absatz gedrückt wird.

Gemäß einem weiteren Ausführungsbeispiel kann die Kugelmutter um größer als 0 Grad bis 10 Grad aus einer neutralen Position gegenüber der Riemenscheibe kippbar sein, bevorzugt um 1 bis 7 Grad und besonders bevorzugt um 4 bis 6 Grad. Das Verkippen um vorzugsweise 5 Grad ermöglicht genügend Spiel, damit der Riemen permanent auf der Riemenscheibe aufliegt und ein Kraftmoment auf den Kugelgewindetrieb übertragen wird.

Insbesondere kann vorgesehen sein, dass der Gleitring zwischen zwei Abstützringen angebracht ist und bevorzugt der Lagerinnenring durch die Abstützringe vorgespannt wird Weitere vorteilhafte Ausführungsformen ergeben sich aus den Unteransprüchen.

Ein bevorzugtes Ausführungsbeispiel wird nachfolgend anhand der Zeichnung näher erläutert. In dieser zeigen:
- Fig. 1: eine perspektivische Seitenansicht eines teilweise aufgeschnittenen Kugelgewindetriebs nach einem ersten Ausführungsbeispiel,
- Fig. 2: eine perspektivische Seitenansicht eines teilweise aufgeschnittenen Kugelgewindetriebs nach einem zweiten Ausführungsbeispiel,

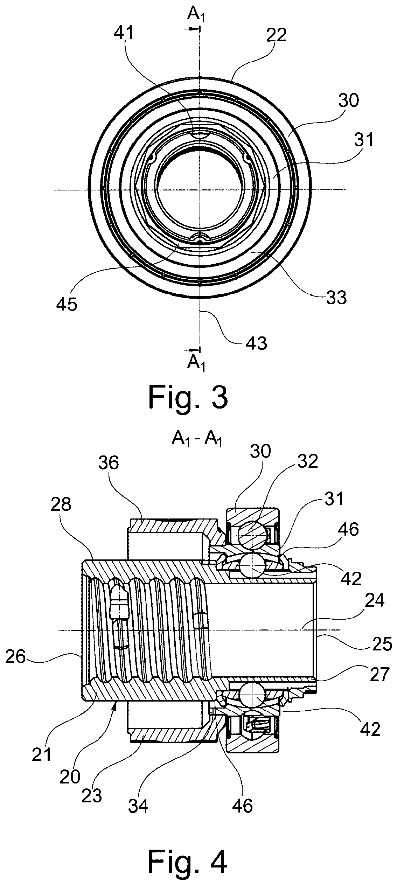

- Fig. 3: eine Frontansicht des Kugelgewindetriebs nach dem ersten Ausführungsbeispiel in ruhender Position der Kugelmutter,
- Fig. 4: eine seitliche Schnittansicht des Kugelgewindetriebs nach der Fig. 3 entlang der Schnittebene A1-A1,

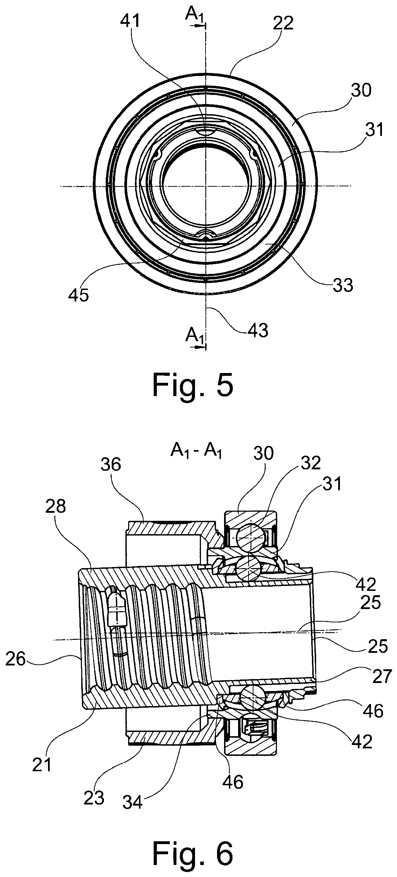

- Fig. 5: eine Frontansicht des Kugelgewindetriebs nach dem ersten Ausführungsbeispiel in verkippter Position der Kugelmutter,
- Fig. 6: eine seitliche Schnittansicht des Kugelgewindetriebs nach der Fig. 5 entlang der Schnittlinie A1-A1,

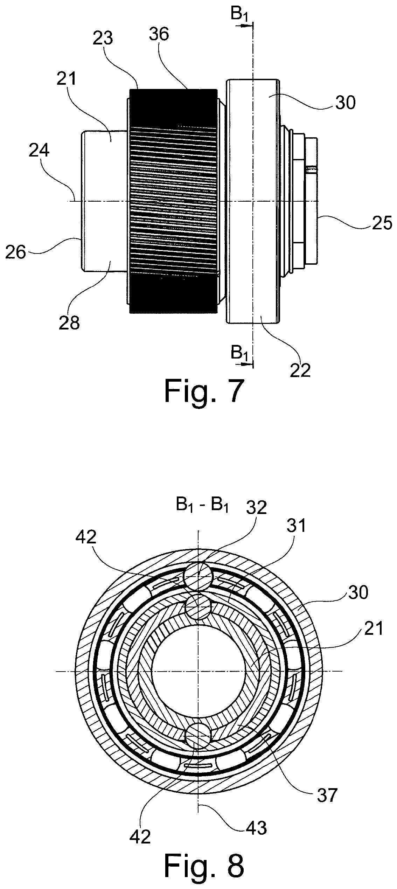

- Fig. 7.: eine Seitenansicht des Kugelgewindetriebs mit Wälzlager, Riemenscheibe und Kugelmutter,
- Fig. 8: eine Schnittansicht entlang der Schnittebene B1-B1 der Fig. 7,
- Fig. 9: eine Explosionszeichnung von Kugelmutter, Gleitring und Lagerinnenring und
- Fig. 10: eine Explosionszeichnung des Kugelgewindetriebs mit Kugelmutter, Gleitring, Riemenscheibe mit Lagerinnenring, Abstützring und Lageraussenring.

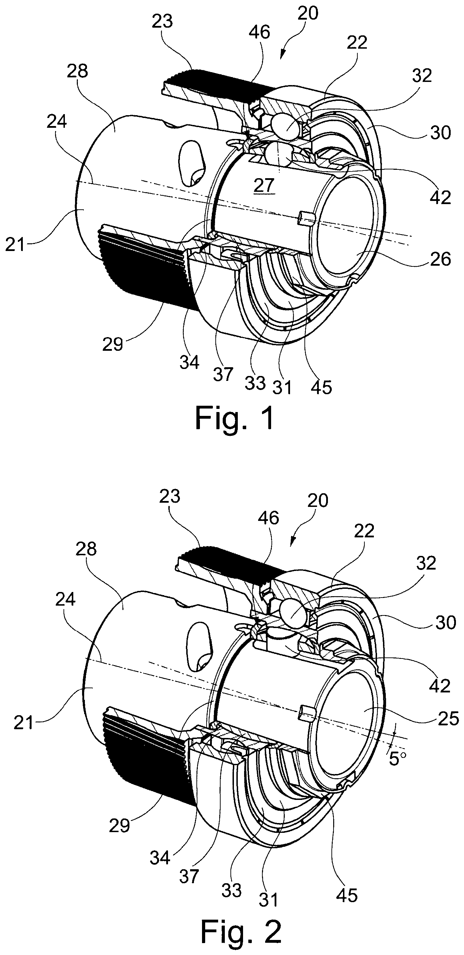

Der erfindungsgemäße Kugelgewindetrieb 20 ist beispielhaft in den Fig. 1 und 2 dargestellt, die eine perspektivische und teilweise geschnittene Seitenansicht des Kugelgewindetriebs 20 zeigen. Hauptmerkmale des Kugelgewindetriebs 20 sind eine Kugelmutter 21, ein Wälzlager 22 und eine an das Wälzlager 22 angelenkte Riemenscheibe 23. Die Kugelmutter 21 ist in dem Wälzlager 22 gelagert.

Elektromechanische Lenksysteme mit einem Riemenantrieb sind allgemein aus dem Stand der Technik bekannt. Insbesondere sind Lenksysteme mit Kugelmutter-Spindel-Trieben bekannt, weshalb nachfolgend auf die prinzipielle Darstellung verzichtet wird und nur auf die der Erfindung wesentlichen Merkmale näher eingegangen wird.

Die Kugelmutter 21 ist in dem Kugelgewindetrieb 20 zentral angeordnet, wobei eine Achse 24 sich in Längserstreckung der Kugelmutter 21 erstreckt. Die Kugelmutter 21 ist hohl zur Aufnahme einer nicht dargestellten Spindel, weshalb die Kugelmutter 21 zwei offene Enden 25 und 26 aufweist. An das eine offene Ende 25 der Kugelmutter 21 schließt sich ein erster Bereich 27 an, dem das Wälzlager 22 zugeordnet ist. Dieser erste Bereich 27 weist gegenüber einem zweiten Bereich 28, der sich im Wesentlichen an das andere offene Ende 26 der Kugelmutter 21 anschließt einen kleineren Außendurchmesser auf. Damit weist der zweite Bereich 28 einen größeren Außendurchmesser als der erste Bereich 27 auf. An einem Übergang von dem ersten zu dem zweiten Bereich 27, 28 ist ein Absatz 29, der sich entlang eines Umfangs der Kugelmutter 21 erstreckt.

Die Kugelmutter 21 ist im Bereich des ersten Bereichs 27 in dem Wälzlager 22 gelagert. Das Wälzlager 22 weist einen Lageraußenring 30 und einen Lagerinnenring 31 auf. Wälzkörper in Form von Kugeln 32 sind zwischen den beiden Lagerringen 30 und 31 angeordnet, wobei auch andere Formen als Kugeln 32 zum Einsatz kommen können. Weiterhin weist das Lager 22 zwei Dichtringe 33 auf, die zwischen den beiden Lagerringen 30 und 31 angeordnet sind und einen Zwischenraum, in dem die Kugeln 32 angeordnet sind, seitlich nach außen abdichten.

Der Lagerinnenring 31 ist mit der Riemenscheibe 23 verbunden. Hierfür weist der Lagerinnenring 31 eine in Axialerstreckung des Lagers 22 gerichtete Auskragung 34 auf, an die die Riemenscheibe 23 drehfest angelenkt ist. Der Lagerinnenring 31 überragt mit der Auskragung 34 zumindest abschnittsweise den Absatz 29, wobei die Riemenscheibe 23 auf einer Außenumfangsfläche 35 der Lagerinnenrings 31 angeordnet ist. Eine Verbindung von Riemenscheibe und Auskragung 34 ist aus dem Stand der Technik bekannt.

Die Riemenscheibe 23 erstreckt sich von dem Lagerinnenring 31 in axialer Richtung der Kugelmutter 21 und überdeckt dabei im Wesentlichen den zweiten Bereich 28. Auf einer Außenumfangsfläche 36 weist die Riemenscheibe eine Struktur auf, die einen Reibschluss mit einem nicht dargestellten Riemen erhöht. Hierfür ist im Ausführungsbeispiel die Struktur geriffelt ausgeführt.

Zwischen dem Wälzlager 22 und der Kugelmutter 21 ist ein Gleitring 37 angeordnet, der im ersten Bereich 27 die Kugelmutter 21 umfasst. Der Gleitring 37 liegt im Wesentlichen in Dichtlage auf dem ersten Bereich 27 auf. Der Gleitring 37 weist ferner wenigstens zwei Ausnehmungen in Form von Durchbrechungen 38 auf, die gegenüberliegend angeordnet sind. Eine Oberfläche 39 des Gleitrings 37, die zum Lagerinnenring 31 zeigt, weist eine Krümmung auf, wodurch sich eine ballig ausgeformte Oberfläche 39 ergibt. Diese ballig geformte Oberfläche 39 korrespondiert mit einer Oberfläche 40 des Lagerinnenrings 31, die konkav ausgeformt ist.

Die zwei Durchbrechungen 38 des Gleitrings 37 korrespondieren mit jeweiligen Nuten 41, die in dem ersten Bereich 27 der Kugelmutter 21 angeordnet sind. Die Nuten 41 sind in der Kugelmutter 21 in Axialrichtung angeordnet und erstrecken sich im Wesentlich von dem offenen Ende 25 bis kurz vor den Absatz 29. Die Nuten 41 nehmen jeweils ein Mitnahmeelement 42 auf, wobei ein Querschnitt der Nuten 41 an einer äußere Form des Mitnahmeelements 42 angepasst ist. Die Mitnahmeelemente 42 können unterschiedliche Formen aufweisen. In Fig. 1 ist beispielsweise das Mitnahmeelement 42 in Form einer Kugel dargestellt, wohingegen das Mitnahmeelement 42 in Fig. 2 ein Bolzen ist. Entsprechend ist der Querschnitt der Nuten 41 halbkreisförmig oder eckig ausgebildet, je nach äußerer Form des Mitnahmeelements 42.

Der Gleitring 37 ist derart zu den Nuten 41 auf dem ersten Bereich 27 angeordnet, dass die zwei Durchbrechungen 38 oberhalb der Nuten 41 platziert sind, wodurch die Mitnahmeelemente 42 wenigstens zum Teil mit den Durchbrechungen 38 in Eingriff stehen. Die Mitnahmeelemente 42 erstrecken sich durch die Durchbrechungen 38 hindurch und überragen den Gleitring 37 in Richtung des Lagerinnenrings 31. Dabei stehen die Mitnahmeelemente 42 mit dem Lagerinnenring 31 in Kontakt.

Der Lagerinnenring 31 liegt auf den Mitnahmeelementen 42 auf, wodurch das Lager 22 nur punktuell mit der Kugelmutter 21 verbunden ist. Aufgrund dieser punktuellen Lagerung des Wälzlagers 22 ist es möglich, das Wälzlager 22 gegenüber der Achse 24 zu verkippen. Die Dimensionierung der einzelnen Bauteile ist derart gewählt, dass eine Verkippung um bis zu 10 Grad ermöglicht wird. Vorzugweise ist ein Winkel von um die 5 Grad vorgesehen, wie auch in der Fig. 2 angedeutet ist. Das Lager 22 lässt sich einerseits längs einer durch die Mitnahmeelemente 42 verlaufende Achse 43 kippen oder aber auch quer dazu.

Durch die drehfeste Verbindung von Riemenscheibe 23 und Wälzlager 22 bzw. Lagerinnenring 31 ist deshalb auch die Riemenscheibe 23 gegenüber der Achse 24 kippbar, vorzugsweise um einen Winkel von ungefähr 5 Grad. Durch das Verkippen der Riemenscheiben 23 kann der eingangs erwähnte Spannungsabfall wirksam vermieden werden, indem nämlich ein Riemen während des Betriebs ständig vollflächig auf der Riemenscheibe 23 aufliegt. Durch die Entkoppelung der Riemenscheibe 23 von der Kugelmutter 21 kann die von einem Unterstützungsmotor auf die Kugelmutter 21 ausgeübte Drehkraft permanent aufrecht erhalten werden.

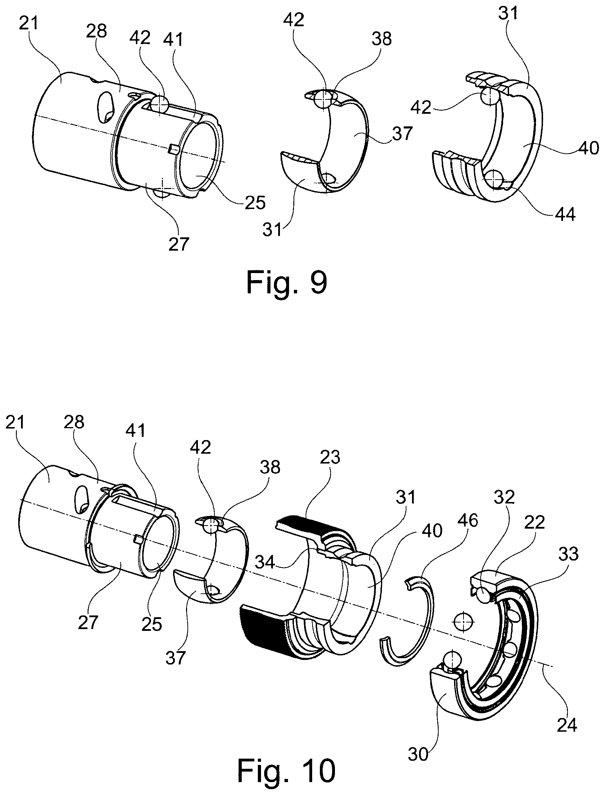

Weiterhin weist der Lagerinnenring 31 Nuten 44 auf, zur Aufnahme der Mitnahmeelemente 42. Die Nuten sind deshalb in einem entsprechenden Bereich in die Oberfläche 40 angeordnet und weisen zusätzlich einen dem Querschnitt der Mitnahmeelemente 42 entsprechenden Querschnitt auf. Die Nuten 44 sind in der Fig. 9 dargestellt. Durch die Nuten ist die Kugelmutter 21 drehfest in dem Wälzlager 22 positioniert. Durch das Verkippen der Kugelmutter 21 bewegen sich die Mitnahmeelemente 42 zumindest zeitweise innerhalb und in Längsrichtung der Nuten 44. Sofern die Kugelmutter 21 sich nur um eine durch die Mitnahmeelemente 42 verlaufende Achse verkippt, bleiben die Mitnahmeelemente 42 unbewegt.

Der Drehring ist mittels eines Befestigungsmittels in Form einer Überwurfmutter 45 auf der Kugelmutter 21 befestigt. Der Drehring ist mit den Mitnahmeelementen 42, die mit den Nuten 41 in Eingriff stehen, derart auf dem ersten Bereich 27 angeordnet, dass der Drehring zumindest mittelbar an dem Absatz 29 anliegt. Durch die Überwurfmutter 45 wird der Drehring auf der Kugelmutter 21 befestigt. Im beschriebenen Ausführungsbeispiel ist zwischen dem Drehring und dem Absatz 29 ein Abstützring 46 vorgesehen, der auch einen Teil des Lagerinnenrings 31 umfasst. Einer solcher Abstützring 46 ist auch zwischen Gleitring 37 und der Überwurfmutter 45 vorgesehen.

Zusammenfassend betrifft die Erfindung einen Kugelgewindetrieb 20 mit einer Kugelmutter 21, einem Wälzlager 22 und einer an das Wälzlager 22 angeordneten Riemenscheibe 23. Die Kugelmutter 21 ist derart in dem Wälzlager 22 angeordnet, dass kein Spannungsabfall zwischen dem der Riemenscheibe 23 und einem seitlich zum Kugelgewindetrieb 20 angeordneten Unterstützungsmotor auftritt.

## Patentansprüche

1. Kugelgewindetrieb mit einer um eine Achse (24) drehbaren Kugelmutter (21) zur Aufnahme einer darin konzentrisch angeordneten Gewindespindel, wobei die Kugelmutter (21) zumindest teilweise in einem einen Lageraußenring (30) und einen Lagerinnenring (31) aufweisenden Wälzlager (22) angeordnet ist und eine Riemenscheibe (23) mit dem Lagerinnenring (31) drehfest verbunden ist, **dadurch gekennzeichnet, dass** die Kugelmutter (21) relativ zur Riemenscheibe (23) in axialer und/oder radialer Richtung beweglich ist.

2. Kugelgewindetrieb nach Anspruch 1, **dadurch gekennzeichnet, dass** die Kugelmutter (21) kippbar gegenüber der Riemenscheibe (23) in dem Wälzlager (22) angeordnet ist.

3. Kugelgewindetrieb nach Anspruch 1 oder 2, **dadurch gekennzeichnet, dass** ein Gleitring zwischen der Kugelmutter (21) und dem Wälzlager (22), insbesondere dem Lagerinnenring (31) angeordnet ist.

4. Kugelgewindetrieb nach wenigstens einem der Ansprüche 1 bis 3, **dadurch gekennzeichnet, dass** eine Außenumfangsfläche (35) des Lagerinnenrings (31) zumindest zum Teil konkav und eine Außenumfangsfläche des Gleitrings (37) wenigstens teilweise konvex ausgebildet ist, wobei beide Außenumfangsflächen miteinander korrespondieren.

5. Kugelgewindetrieb nach Anspruch 3 oder 4, **dadurch gekennzeichnet, dass** der Gleitring (37) eine oder mehrere, vorzugsweise zwei Ausnehmungen (38) aufweist, die insbesondere als Durchgangsöffnung (38) in dem Gleitring (37) ausgebildet sind.

6. Kugelgewindetrieb nach wenigstens einem der Ansprüche 1 bis 5, **dadurch gekennzeichnet, dass** die Kugelmutter (21) eine oder mehrere Nuten (41) aufweist, die sich vorzugsweise in Axialrichtung der Kugelmutter (21) erstrecken, zur wenigstens teilweisen Aufnahme zumindest eines Mitnahmeelements (42).

7. Kugelgewindetrieb nach wenigstens einem der Ansprüche 3 bis 6, **dadurch gekennzeichnet, dass** die Ausnehmungen des Gleitrings (37) und die Nuten (41) der Kugelmutter (21) miteinander korrespondieren und das Mitnahmeelement sich durch die entsprechende Ausnehmung des Gleitrings (37) hindurch erstreckt.

8. Kugelgewindetrieb nach wenigstens einem der Ansprüche 1 bis 7, **dadurch gekennzeichnet, dass** das Mitnahmeelement (42) vorzugsweise eine Kugel oder ein Bolzen ist und in Anlage mit dem Lagerinnenring (31) steht.

9. Kugelgewindetrieb nach wenigstens einem der Ansprüche 3 bis 8, **dadurch gekennzeichnet, dass** die Kugelmutter (21) einen umlaufenden Absatz (29) aufweist zur Widerlagerung des Gleitrings (37).

10. Kugelgewindetrieb nach wenigstens einem der Ansprüche 3 bis 9, **dadurch gekennzeichnet, dass** der Gleitring (37) auf der Kugelmutter (21) mittels einer Überwurfmutter (46) gesichert ist.

11. Kugelgewindetrieb nach wenigstens einem der Ansprüche 3 bis 10, **dadurch gekennzeichnet, dass** die Kugelmutter (21) um größer als 0 Grad bis 10 Grad aus einer neutralen Position gegenüber der Riemenscheibe (23) kippbar ist, bevorzugt um 1 bis 7 Grad und besonders bevorzugt um 4 bis 6 Grad.

12. Kugelgewindetrieb nach wenigstens einem der Ansprüche 3 bis 11, **dadurch gekennzeichnet, dass** der Gleitring (37) zwischen zwei Abstützringen (46) angebracht ist.

13. Kugelgewindetrieb nach Anspruch 12, **dadurch gekennzeichnet, dass** der Lagerinnenring (31) durch die Abstützringe (46) vorgespannt wird.

## Claims

1. Ball screw drive having a ball nut (21) which is able to rotate around an axis (24) for receiving a threaded spindle arranged concentrically therein, wherein the ball nut (21) is arranged at least partially in a rolling bearing (22) having a bearing outer ring (30) and a bearing inner ring (31), and a pulley (23) to which the bearing inner ring (31) is connected non-rotatably, **characterised in that** the ball nut (21) is able to move in an axial and/or radial direction relative to the pulley (23).

2. Ball screw drive according to claim 1, **characterised in that** the ball nut (21) is arranged in the rolling bearing (22) to be able to tilt relative to the pulley (23).

3. Ball screw drive according to claim 1 or 2, **characterised in that** a sliding ring is arranged between the ball nut (21) and the rolling bearing (22), in particular the bearing inner ring (31).

4. Ball screw drive according to at least one of claims 1 to 3, **characterised in that** the outer peripheral surface (35) of the bearing inner ring (31) is formed to be at least partially concave and an outer peripheral surface of the sliding ring (37) is formed to be at least partially convex, wherein the two outer peripheral surfaces correspond to each other.

5. Ball screw drive according to claim 3 or 4, **characterised in that** the sliding ring (37) has one or more, preferably two, recesses (38), which in particular are formed as a through-opening (38) in the sliding ring (37).

6. Ball screw drive according to at least one of claims 1 to 5, **characterised in that** the ball nut (21) has one or more grooves (41) which extend preferably in the axial direction of the ball nut (21), for the at least partial receiving of at least one entrainment element (42).

7. Ball screw drive according to at least one of claims 3 to 6, **characterised in that** the recesses of the sliding ring (37) and the grooves (41) of the ball nut (21) correspond to one another and the entrainment element extends through the corresponding recess of the siding ring (37).

8. Ball screw drive according to at least one of claims 1 to 7, **characterised in that** the entrainment element (42) is preferably a ball or a bolt, and is in contact with the bearing inner ring (31).

9. Ball screw drive according to at least one of claims 3 to 8, **characterised in that** the ball nut (21) has a circulating section (29) for abutment of the siding ring (37).

10. Ball screw drive according to at least one of claims 3 to 9, **characterised in that** the sliding ring (37) is secured on the ball nut (21) by means of a union nut (46).

11. Ball screw drive according to at least one of claims 3 to 10, **characterised in that** the ball nut (21) is able to be tilted by greater than 0 degrees to 10 degrees from a neutral position relative to the pulley (23), preferably by 1 to 7 degrees and particular preferably by 4 to 6 degrees.

12. Ball screw drive according to at least one of claims 3 to 11, **characterised in that** the sliding ring (37) is attached between two support rings (46).

13. Ball screw drive according to claim 12, **characterised in that** the bearing inner ring (31) is pre-tensioned by the support rings (46).

## Revendications

1. Vis d'entraînement à billes dotée d'un écrou sphérique (21) pouvant être entraîné en rotation autour d'un axe (24) et destinée à accueillir une broche filetée y étant disposée concentriquement, auquel cas l'écrou sphérique (21) est disposé, au moins partiellement, dans un palier à roulement (22) comportant une bague extérieure de palier (30) et une bague intérieure de palier (31) et une poulie à courroie (23) est reliée solidairement avec la bague intérieure de palier (31), **caractérisée en ce que** l'écrou sphérique (21) est mobile dans une direction axiale et/ou radiale par rapport à la poulie à courroie (23).

2. Vis d'entraînement à billes selon la revendication 1, **caractérisée en ce que** l'écrou sphérique (21) est agencé de façon à pouvoir être incliné par rapport à la poulie à courroie (23) dans le palier à roulement (22).

3. Vis d'entraînement à billes selon la revendication 1 ou 2, **caractérisée en ce qu'**une bague de glissement est agencée entre l'écrou sphérique (21) et le palier à roulement (22), en particulier la bague intérieure de palier (31).

4. Vis d'entraînement à billes selon au moins l'une quelconque des revendications de 1 à 3, **caractérisée en ce qu'**une surface périphérique extérieure (35) de la bague intérieure de palier (31) est formée, au moins partiellement, concave et qu'une surface périphérique extérieure de la bague de glissement (37) est formée, au moins partiellement, convexe, auquel cas les deux surfaces périphériques extérieures se correspondent l'une avec l'autre.

5. Vis d'entraînement à billes selon la revendication 3 ou 4, **caractérisée en ce que** la bague de glissement (37) présente un ou plusieurs évidements (38), de préférence deux, qui sont formés en tant qu'ouverture de passage (38) dans la bague de glissement (37).

6. Vis d'entraînement à billes selon au moins l'une quelconque des revendications de 1 à 5, **caractérisée en ce que** l'écrou sphérique (21) présente une ou plusieurs rainures (41) qui s'étendent, de préférence, dans la direction axiale de l'écrou sphérique (21) et qui sont destinées à accueillir, au moins partiellement, au moins un élément d'entraînement (42).

7. Vis d'entraînement à billes selon au moins l'une quelconque des revendications de 3 à 6, **caractérisée en ce que** les évidements de la bague de glissement (37) et les rainures (41) de l'écrou sphérique (21) se correspondent l'un avec l'autre et l'élément d'entraînement s'étend à travers l'évidement correspondant de la bague de glissement (37).

8. Vis d'entraînement à billes selon au moins l'une quelconque des revendications de 1 à 7, **caractérisée en ce que** l'élément d'entraînement (42) est, de préférence, une sphère ou un boulon et est en appui contre la bague intérieure de palier (31).

9. Vis d'entraînement à billes selon au moins l'une quelconque des revendications de 3 à 8, **caractérisée en ce que** l'écrou sphérique (21) présente un épaulement périphérique (29) destiné à accueillir à nouveau la bague de glissement (37).

10. Vis d'entraînement à billes selon au moins l'une quelconque des revendications de 3 à 9, **caractérisée en ce que** la bague de glissement (37) est fermement fixée sur l'écrou sphérique (21) à l'aide d'un écrou-raccord (46).

11. Vis d'entraînement à billes selon au moins l'une quelconque des revendications de 3 à 10, **caractérisée en ce que** l'écrou sphérique (21) est susceptible d'être incliné de plus de 0 degré jusqu'à 10 degrés, à partir d'une position neutre, par rapport à la poulie à courroie (23), de préférence de 1 à 7 degrés et idéalement de 4 à 6 degrés.

12. Vis d'entraînement à billes selon au moins l'une quelconque des revendications de 3 à 11, **caractérisée en ce que** la bague de glissement (37) est montée entre deux bague d'appui (46).

13. Vis d'entraînement à billes selon la revendication 12, **caractérisée en ce que** la bague intérieure de palier (31) est précontrainte à l'aide de la bague d'appui (46).
